# EUROPÄISCHE PATENTSCHRIFT

(11) **EP 1 358 621 B1**
(45) Veröffentlichungstag und Bekanntmachung des Hinweises auf die Patenterteilung: **02.11.2006**
(21) Anmeldenummer: 01905701.7
(22) Anmeldetag: 29.01.2001
(51) Int. Cl.: G06K 9/00

(54) **PERSONENERKENNUNG MIT HANDYUNTERSTÜTZUNG**
RECOGNISING PEOPLE USING A MOBILE APPLIANCE
RECONNAISSANCE DE PERSONNE A L'AIDE D'UN APPAREIL MOBILE

(43) Veröffentlichungstag der Anmeldung: 05.11.2003
(73) Patentinhaber: BenQ Mobile GmbH & Co. OHG, 81667 München (DE)
(72) Erfinder: BOCK, Gerhard, 82131 Gauting (DE)
(86) Internationale Anmeldenummer: PCT/EP2001/000929
(87) Internationale Veröffentlichungsnummer: WO 2002/061666

(56) Entgegenhaltungen:
- EP-A- 0 944 019
- HARMON L D ET AL: "AUTOMATIC RECOGNITION OF HUMAN FACE PROFILES" COMPUTER GRAPHICS AND IMAGE PROCESSING, ACADEMIC PRESS. NEW YORK, US, Bd. 6, Nr. 2, 1. April 1977 (1977-04-01), Seiten 135-156, XP002043941
- BRZEZOWSKI S J ET AL: "INTEGRATED PORTABLE SYSTEM FOR IDENTIFICATION AND TRACKING" PROCEEDINGS OF THE SPIE, SPIE, BELLINGHAM, VA, US, Bd. 2935, 19. November 1996 (1996-11-19), Seiten 24-35, XP000957348

## Beschreibung

Die Erfindung betrifft ein Endgerät der Kommunikations- oder der Datenverarbeitungstechnik gemäß dem Oberbegriff des Patentanspruchs 1.

Solche Endgeräte sind beispielsweise ein Video-Mobilfunkgerät, ein sogenanntes Videohandy, oder ein Notebook und insbesondere ein Palmtop und ein PDA (Persönlicher Digitaler Assistent).

Im Geschäftsleben hat man mit einer Vielzahl von Kontaktpersonen zu tun. Nicht immer ist die Zuordnung von Namen und Personen einfach, wenn man die Leute selten sieht. Insbesondere bei einem unvorbereiteten Treffen ist es unangenehm, wenn einem der Namen des Gesprächspartners nicht einfällt.

Bekannt sind bildunterstützte Adressbücher auf Personal Computern, bei denen der Suchvorgang beziehungsweise das Erkennen der Personen manuell durchgeführt wird.

Aus dem Patent EP 0944019 is auch ein Gerät mit Kamera zur Identifizierung von Personen mit einer personenbezogenen Datebank bekannt; die Identifizierung findet automatisch statt durch den Vergleich eines über die Kamera aufgenommen Bildes mit den gespeicherten Bildern.

Der Erfindung liegt die Aufgabe zugrunde, ein Endgerät der eingangs genannten Art zur Personenerkennung zu verwenden.

Diese Aufgabe wird erfindungsgemäß durch die im Patentanspruch 1 angegebenen Merkmale gelöst.

Im Folgenden wird die Erfindung anhand eines Ausführungsbeispieles beschrieben.

Die Erfindung geht aus von einem Video-Mobilfunkgerät oder von einem Palmtop, auf denen eine personenbezogene Datenbank mit Bildern gespeichert ist. Die Art der Einspielung der Bilder kann bei dem Video-Mobilfunkgerät über die dort eingebaute Kamera erfolgen. Beim Palmtop erfolgt die Einspielung der

Bilder beispielsweise über externe Bildaufnahmeeinrichtungen, wobei die Art und Weise für die Erfindung von untergeordneter Bedeutung ist. Das insbesondere mobile Endgerät weist also eine personenbezogene Datenbank, beispielsweise ein Adressbuch oder Telefonbuch, sowie zugehörige Bilder auf.

Erfindungsgemäß erfolgt im Endgerät ein Vergleich von eingegebenen persönlichen Merkmalen mit diesen Bildern. Solche persönliche Merkmale sind beispielsweise die Form des Gesichtes, ein Bart oder eine Brille, oder sonstige auf den Bildern im Detail festgehaltene Inhalte. Die Eingabe der Merkmale erfolgt vorzugsweise über die vorhandene Tastatur oder beispielsweise auch über eine Spracherkennung. Die manuell eingegebenen Merkmale werden mit dem gespeicherten Bild in der Datenbank verglichen und das Ergebnis ausgegeben.

Als Ergebnis wird beispielsweise eine Liste derjenigen Personen ausgegeben, deren Bilder am besten mit den eingegebenen Merkmalen übereinstimmen. Die Ausgabe der Person beziehungsweise Personen kann mit Namen und gegebenenfalls Adresse oder Telefonnummer, sowie auch zusätzlich über das zugehörige Bild erfolgen.

## Patentansprüche

1. Endgerät der Kommunikations- oder Datenverarbeitungstechnik mit einer personenbezogenen Datenbank, zu der persönliche Bilder gespeichert sind,
**gekenzeichnet durch**
Mittel zum Vergleich von manuell eingegebenen persönlichen Merkmalen mit den auf den persönlichen Bildern Festgehaltenen Merkmalen, und
Ausgabe der ermittelten Person beziehungsweise Personen durch Daten und/oder Bild.

## Claims

1. Terminal of the communication or data processing technique comprising a person-related database, in which images of people are stored,
**characterised by**
means for comparing manually input personal features with the features captured on the images of people, and
outputting the identified person or people in the form of data and/or image.

## Revendications

1. Terminal de la technique de communication ou de traitement de données avec une banque de données concernant des personnes à laquelle sont associées des images personnelles mémorisées,
**caractérisé par**
des moyens aptes à comparer des caractéristiques personnelles, introduites manuellement, avec les caractéristiques enregistrées sur les images personnelles, et
affichage de la personne reconnue, ou des personnes reconnues,
par données et/ou image.
